# EUROPÄISCHE PATENTANMELDUNG

(11) **EP 4 332 139 A1**
(43) Veröffentlichungstag der Anmeldung: **06.03.2024**
(21) Anmeldenummer: 22193223.9
(22) Anmeldetag: 31.08.2022
(51) Int. Cl.: C08G 18/62, C09D 175/04, A63G 21/18, C08G 18/73, C08G 18/80

(54) **VERWENDUNG EINER POLYURETHAN-BESCHICHTUNG ZUR PFLEGE UND REPARATUR VON WASSERRUTSCHEN**

(71) Anmelder: Porviva BV, 6422 RM Heerlen (NL)
(72) Erfinder: Pleyers, Gerd Josef, 52146 Würselen (DE); Pleyers, Tim Peter, 52146 Würselen (DE); Krayer, Stefan Andreas, 40764 Langenfeld (DE)
(74) Vertreter: Schüssler, Andrea

(57) **Zusammenfassung**

Die vorliegende Erfindung betrifft die Verwendung eines 2-Komponenten Polyurethanharzes, das in einer Dicke von weniger als 100 µm auf eine Wasserrutsche aufgebracht wird, zur Erstausstattung, Pflege und Reparatur von Wasserrutschen.

## Beschreibung

### Gebiet der Erfindung

Die vorliegende Erfindung betrifft die Verwendung einer Polyurethan-Beschichtung zur Verbesserung, Pflege und Reparatur von Wasserrutschen.

### Stand der Technik

Standardwasserrutschen aus Kunststoff werden auf der Rutschfläche, auch Wasserflächenseite genannt, mit einer sogenannten "Gelcoat"-Schicht ausgeführt. Hierbei gibt es verschiedenste Ausführungen bzw. Oberflächenqualitäten. Der Begriff "Gelcoat" wird etwas unscharf als Synonym für eine Vielzahl unterschiedlichster Beschichtungen verwendet. Die Oberflächen bestehen in der Regel aus einer Polymerschicht. Diese kann auf Epoxid-, Acrylat- oder auch Polyurethan-Basis sein. Die Hersteller geben in ihren schriftlich formulierten Gewährleistungsbedingungen vor, dass die Oberflächen je nach Beanspruchung regelmäßig mit einer schützenden Wachsschicht zu versehen sind. Empfohlen wird eine Erneuerung der Wachsschicht im Turnus von 1 bis 3 Monaten. Zum Einsatz kommt, ähnlich wie bei Kraftfahrzeugen, Hartwachs, das im Anschluss poliert werden muss.

Neben der Wachsschicht zur fortlaufenden Pflege gibt es die Möglichkeit zur kompletten Erneuerung des Gelcoats. Dazu wird in der Regel sehr aggressiv vorgegangen. Es wird die existierende Beschichtung massiv angeschliffen (aufgeraut), um einen späteren Verbund zu gewährleisten. Diese Erneuerung wird mit einer sehr dicken Schicht (>>500 µm) Gelcoat, oder im Einzelfall sogar zusätzlich mit neuen Glasfasern ausgeführt.

Die Rutschfläche einer Wasserrutsche wird durch das Rutschen und insbesondere durch das durchfließende Wasser abrasiv beansprucht. Werden die Oberflächen nicht früh genug und/oder nicht ausreichend oft neu gewachst, entstehen durch den Abrieb rauhe Oberflächen. Der Abrieb kann sogar vollständig die Gelcoat-Schicht abnutzen bzw. entfernen, so dass die strukturstützende Bewehrung (meist Glasfaser) freigelegt wird. Spätestens in diesem Zustand muss die Gelcoat-Schicht erneuert werden, um die Wasserrutsche weiter gefahrlos nutzen zu können und ein weiteres Wachsen würde keinen dauerhaft glättenden Effekt mehr bringen.

Das regelmäßige Wachsen, um die Bedingungen zum Erhalt der Gewährleistungsansprüche und der notwendigen Betriebsbedingungen zu erfüllen bzw. um der Lebensdauer der gesamten Rutsche Rechnung zu tragen, bedeutet für den Betreiber der Wasserrutschen einen hohen Aufwand. Besonders während der Saison kommt es bei der sehr aufwendigen, arbeits- und zeitintensiven Prozedur zu teuren Stillstandzeiten. Ist sogar die Gelcoat-Schicht zu erneuern, beinhaltet jeder Ersatz bzw. die Reparatur der Gelcoat-Schicht neben dem Grundaufwand das Risiko der Teilablösung der Gelcoat-Schicht, wodurch die Gefahr von Schnittverletzungen bei den rutschenden Badegästen besteht. Das während des Produktionsprozesses des Rutschenkörpers in der Form aufgetragene Gelcoat reagiert chemisch mit der Oberfläche des Trägermaterials. Die Qualität dieses Verbundes bei Reparaturmaßnahmen nachträglich wieder herzustellen ist schwierig. Bei der Erneuerung des Gelcoats wird die Gelcoat-Schicht und oft auch die Tragstruktur (d.h. der eigentliche Rutschenkörper) hohen Beanspruchungen ausgesetzt. Um einen sicheren Verbund gewährleisten zu können, muss beim Anschleifen regelmäßig mehr (intaktes) Gelcoat abgetragen werden, als minimal notwendig wäre. Dies führt auf Dauer zu Schäden an der eigentlichen Röhre. Das Erneuern des Gelcoats ist eine vom Aufwand her zeitliche und finanzielle Hürde. Das Problem wird von dem Betreiber oft zu spät angegangen / aufgeschoben, was einen weiteren Qualitätsverlust der Rutsche zur Folge hat und einen immer größer werdenden Reparaturaufwand mit sich bringt.

Die geringe Abrasionsbeständigkeit von Wachs und/oder Gelcoat führt schon nach wenigen Wochen oder Monaten der Rutschenbenutzung zum Verlust der notwendig glatten Oberfläche. Diese Beobachtung wurde selbst bei Wasserparks im Innenbereich, d.h. ohne Einwirkung von Umwelteinflüssen, wie direkter Sonneneinstrahlung oder Wind, gemacht. In ganzjährig geöffneten, stark frequentierten, frei bewitterten Wasserparks entwickelt sich die Abrasion mit noch größerer Geschwindigkeit. Extremste Beanspruchungen entstehen bei dem Betrieb von Outdoor-Wasserrutschen in heißen Gegenden, wie im mittleren Osten (z.B. in Dubai, U.A.E.) und im Süden der USA (z.B. Nevada, Kalifornien, Florida). Hier kommen oft zu den extremen Wetterbedingungen (Hitze, UV-Strahlung, Temperaturwechsel etc.) noch mechanisch abrasive Sandstürme hinzu.

Auch ohne extreme Aussenbedingungen und trotz regelmässigen Wachsens weisen die Rutschenoberflächen allgemein bereits nach kurzer Gebrauchszeit eine vom Ursprungszustand abweichende, ausgeprägte Mikrorauhigkeit auf, was die Ablagerung von Feinstpartikeln bzw. eine Verschmutzung begünstigt. Diese Verschmutzungen führen dann zu einer weiteren Steigerung der Rauhigkeit. Zu den Ablagerungen zählen insbesondere Chloride, (Kalk-)salze, sonstige Feinstpartikel bzw. Schwebstoffe aus dem verwendeten Wasser (regional unterschiedlich). Die Ablagerungen und Verschmutzungen erhöhen den Reibwiderstand, was die Rutschgeschwindigkeiten reduziert und bei sogenannter "Druckwasserbeschleunigung" von rutschenden Personen in horizontal, bzw. ansteigend verlaufenden Rutschenbereichen höhere Pumpenleistungen und somit einen höheren Energiebedarf erforderlich macht.

Die entstehenden Verschmutzungen, welche abhängig von der Region, den Betriebs- und Umweltbedingungen, schon nach wenigen Wochen des Betriebes einer neuen Rutsche auftreten, haben zur Folge, dass entweder die Verschmutzung und die damit einhergehende größere Rauhigkeit durch den Betreiber hingenommen werden muss oder zur Reinigung sehr aggressive Reinigungsmittel zum Einsatz kommen. Als letzter Ausweg bleibt dann nur die mechanische Reinigung durch abrasive Verfahren (Schleifen). Bei kürzeren Reinigungsintervallen und massiverer Reinigung erhöht sich der Verschleiß und es verkürzt sich die Lebensdauer der Rutsche.

Setzt man den Aufwand für das Wachsen und insbesondere den Neuauftrag des Gelcoats ins Verhältnis zum Ertragsverlust wegen der Stillstandszeiten, so ergibt sich eine schlechte Bilanz. Dies gilt besonders für Wasserparks, welche ganzjährig in Betrieb sind.

Neu aufgebrachtes Gelcoat stellt auch wieder eine Verschleißschicht dar. Es hat die gleichen Probleme wie die Originalbeschichtung in einer neuen Rutsche. Es werden zwar längere Lebensdauern über größere Schichtdicken erzielt, aber das Grundproblem des niedrigen Abrasionswiderstandes wird nicht gelöst.

Einen Gelcoat aufzubringen, ohne aggressive Untergrundvorbereitung und ohne erneutes Verlegen von Glasfaser zur Gewährleistung des Verbundes zum existierenden Gelcoats bzw. zur Glasfaser, funktioniert in der Regel nicht zuverlässig. Die technisch, wegen des geringen Abrasionswiderstands der bisher verwendeten Beschichtungen, notwendigen dicken Schichten führen oft durch Eigen-/ Verbundspannungen in Kombination mit mangelndem Verbund zum Untergrund zu Abplatzungen.

Die Eigenspannungen werden im Zusammenspiel mit schlechtem Verbund zwischen zwei sich unterschiedlich ausdehnenden Materialien, sowie der dynamischen Beanspruchung beim Rutschen und der thermischen Beanspruchung (Tag/Nacht, Sommer/Winter) der Rutsche verursacht.

Es besteht daher ein hohes Verletzungsrisiko für die rutschenden Personen durch hervorstehende, scharfkantige Beschichtungsteile (des Gelcoats) auf einer ansonsten glatten Oberfläche.

### Aufgabe der Erfindung

Es besteht daher die Aufgabe bei Wasserrutschen eine Beschichtung bereitzustellen, die eine Zeit von mindestens 3-6 Monaten ohne die Gefahr von Abplatzungen dauerhaft bleibt, einfach aufgebracht bzw. überarbeitet werden kann und durch eine höhere Abrasionsbeständigkeit ein kostengünstigeres, einfacheres und damit besseres Instandhaltungs- bzw. Reinigungskonzept erlaubt.

### Lösung der Aufgabe

Diese Aufgabe wird durch die Verwendung eines wasserbasierten 2-Komponenten Polyurethanharzes (im nachfolgenden "2K-PUR"), das in geringen Schichtdicken (<< 100 µm) auf eine Wasserrutsche aufgebracht wird, gelöst. Das Polyurethanharz ist wasserverdünnbar, im ausreagierten Zustand lösemittelbeständig sowie hochvernetzt. Es zeichnet sich durch eine ausgeprägte Chemikalienbeständigkeit und sehr gute Abrasionsbeständigkeit aus. Geringe Schichtdicken (<< 100 µm) weisen ein geringeres Risiko von Adhäsionsversagen zwischen dem Rutschenmaterial und der aufgebrachten Beschichtung auf. Im Falle eines doch auftretenden Adhäsionversagens ist das Risiko der Verletzung bei einer dünnen Schicht geringer als bei spröden "Dickbeschichtungen".

Das 2K-PUR wird durch eine Harzkomponente A und eine Härterkomponente B gebildet. Die Harzkomponente (A) enthält neben Wasser vorzugsweise eine anionische Polyacrylat-Dispersion, einen Entschäumer, ein Silikontensid, ein Polyacrylat-basiertes Oberflächen-Additiv, einen Katalysator (z.B. Zink-Amin-Komplex) und einen Rheologie-Modifizierer (insbesondere ein hydrophob modifiziertes ethoxyliertes Urethan). Die Härterkomponente (B) ist vorzugsweise ein Polyisocyanat, insbesondere ein hydrophiles aliphatisches Polyisocyanat auf Basis von Hexamethylendiisocyanat (HDI).

"Abrasionsbeständigkeit" zeichnet sich durch Vermeidung bzw. Verminderung von abrasivem Verschleiß aus. Als "Abrasion" wird Materialverlust bezeichnet, der u. a. durch mechanische Einwirkung eines Reibungspartners auf den anderen oder durch ein strömendes Medium entsteht. Partikel, die dabei aus dem Werkstoff gelöst werden, heißen Abrieb. Die Abrasionsbeständigkeit kann durch verschiedene Verfahren, z.B. einen Scrub-Test, bestimmt werden.

Erfindungsgemäß beträgt die Schichtdicke weniger als 100 µm, aber mehr als 3 µm. Vorteilhafterweise ist die Schichtdicke zwischen 5 und 90 µm, bevorzugt zwischen 10-20 und 85 µm, ganz bevorzugt zwischen 30 und 80 µm, weiter bevorzugt um 75 µm. Bei der Einpflege sind Schichtdicken von 3-10 µm, bevorzugt ungefähr 5 µm, anstrebenswert.

In einer bevorzugten Ausführungsform handelt es sich bei dem 2-Komponenten Polyurethanharz um das im Fachhandel käufliche "porviva WSC050", das durch folgende Rezeptur und folgende Eigenschaften gekennzeichnet ist:

| **Pos.** | **porviva WSC050 transparent gloss A Komponente (Harz)** | **Gew. Teile 100 g** |
|---|---|---|
| | Glänzend, MV=5:1 | |
| 1 | Bayhydrol^{®} A 2542 | 50,00 |
| 2 | Byk 011 | 2,50 |
| 3 | Byk 345 | 0,30 |
| 4 | BYK 3441 | 0,50 |
| 5 | K-Kat XK-661 | 0,30 |
| 6 | De-Ionisiertes Wasser | 44,40 |
| 7 | Rheovis^{®}PU 1214 | 2,00 |
| | **Summe** | **100,00** |
| **Pos.** | **porviva WSC050 transparent gloss B Komponente (Härter)** | **Gew. Teile 100 g** |
| 1 | Bayhydur^{®} XP 2547 | 20,00 |

Die Liefermischung mit ca. 60 % Wirkstoffgehalt kann mit bis zu 5 Teilen Wasser verdünnt werden. Hieraus folgt die Variation des Wirkstoffgehaltes von ca. 5 % bis ca. 60% der wässrigen Lösung zur flexiblen Einstellung der Schichtdicke, d.h. die Beschichtung kann als Erstausstattung bei der Auslieferung der Wasserrutsche bzw. späterer Basisschutz (bei geringer Wasserzugabe << 100µm) und als Einpflege/Verschleißschicht (mit hoher Wasserzugabe 3-10 µm, bevorzugt ungefähr 5 µm (3 / bis 1:5 mit Wasser verdünnt) eingesetzt werden. Durch die hohe Vernetzung des Produkts führt dies zu besserer Abrasionsbeständigkeit und Reinigungsfähigkeit.

Des Weiteren muss die Untergrundvorbereitung weniger abrasiv erfolgen. Es hat sich als vorteilhaft herausgestellt, den Untergrund vorsichtig abzuschleifen oder besser mit geeigneten Verfahren abzustrahlen, um weniger intakte Schichtdicke abtragen zu müssen. Ansonsten kann das Abtragen von farbigem Gelcoat, der werksseitig bei der Herstellung der Wasserrutsche aufgebracht worden war, zur Folge haben, dass Glasfaser freigelegt wird. Durch Strahlen kann die Oberfläche in Tiefpunkten als auch Hochpunkten gleichmäßig vorbereitet werden, während beim Schleifen nur die Hochpunkte mechanisch abgenutzt werden. Um eine Untergrundvorbereitung zu vervollständigen, müssen die Hochpunkte bis zu den Tiefpunkten weggenommen werden. Durch Strahlen wird eine höhere Rauigkeit für einen besseren mechanischen Verbund des erfindungsgemäß aufzubringenden 2K-PUR erreicht. Durch diese gezieltere Untergrundvorbereitung entstehen auch weniger Schäden am Untergrund und es werden adhäsionsmindernde Partikel entfernt. Erfindungsgemäß wird daher unter "Abstrahlen" eine mechanische Oberflächenbehandlung mit Strahlmitteln verstanden, bei der die Oberfläche mit körnigen Materialien unterschiedlicher Form und Größe beworfen wird. Das körnige Material besitzt dabei eine durch Fremdeinwirkung vorgegebene erhöhte Relativgeschwindigkeit zur Oberfläche. Diese Geschwindigkeit wird dem Korn entweder durch Werfen oder durch ein strömendes Trägermedium mitgeteilt. Beim Werfen wird das Korn von rotierenden Armen eines Schleuderrades erfasst. Beim Transport durch ein Transportmedium erhält letzteres über Pumpen oder Kompressoren zunächst eine kinetische Energie, ehe das Korn in das Transportmedium eingetragen wird. Als Transportmedien kommen allgemein Luft oder Wasser in Betracht (Nassstrahlen). Das beschleunigte Korn trifft dann auf die rauhe Oberfläche eines Werkstücks, auf der es eine spanabhebende Funktion ausüben soll.

Je nach Größenrelation zwischen Rauhigkeit der Oberfläche und Korngröße des Strahlmittels ist der Strahleffekt unterschiedlich.

Der technische Nutzen der Erfindung besteht darin, dass die erfindungsgemäß aufgebrachte Beschichtung die Lebensdauer des werkseitig aufgebrachten Gelcoats besser als Wachsen verlängert. Die Beschichtung erlaubt des Weiteren eine schnelle Überarbeitung mit sich selbst bei Teilverschleiß der Beschichtung. (Einpflege), wodurch kostenintensivere Reparaturen und/oder Neuinvestitionen später anfallen werden.

Die Einpflege (Schichten von ca. 3 bis 10 µm (2-PUR bis zu 1:5 mit Wasser verdünnt)) kann in kürzeren Intervallen zur einfachen Überarbeitung bereits stumpfer bzw. rauher Oberflächen eingesetzt werden. Für die "Einpflege" ist lediglich eine leichte Reinigung mit Druckwasser und ggf unter Hinzunahme von Reinigungspads und leichten chemischen Reinigern erforderlich und das Aufbringen sehr dünner 2-PUR Schichten. Lediglich kleine Kratzer und Mikrofehlstellen sollen bei der Einpflege örtlich ausgefüllt und repariert werden. Eine glatte und ebene Fläche mit geringem Reibwiderstand wird so wieder hergestellt. Sollte die Einpflege auf den noch ebenen und intakten Oberflächenbereichen eine unzureichende Haftung aufweisen, wäre der Erfolg der Reparaturmaßnahme trotzdem sichergestellt. Lose nicht anhaftende "Einpflegeschichten" (mit einer Schichtdicke von ca. 3 bis 10 µm) stellen weder ein Mangel noch eine Einschränkung der Nutzung dar.

Längere Laufzeiten führen zu Erhöhung der Dauerhaftigkeit und Langlebigkeit der gesamten Rutsche. Da die Beschichtung nur dünn ist, können keine groben Abplatzungen entstehen, was Unfälle mit Schnittverletzungen verhindert. Sie erzeugt auch eine geringere Reibung, was sich positiv auf weniger notwendige Pumpenleistung und damit einen geringeren Energieverbrauch für den Betrieb auswirkt.

Das nachfolgende Beispiel soll die Erfindung erläutern, aber stellt keine Beschränkung auf die exakte Ausführungsform dar.

### Beispiel 1

Als 2-Komponenten PUR-Beschichtung wird käuflich erhältliches "porviva WSC050" ("transparent gloss", "transparent matt" oder "color gloss"(Wunschfarbe)), das Komponente A (Harz) und Komponente B (Härter) im richtig abgestimmten Verhältnis enthält, verwendet. Die Komponente B ist restlos in das Gebinde der Komponente A zu entleeren. Zum Erreichen einer homogenen Konsistenz und einer intensiven Durchmischung sind die beiden Komponenten mit einem geeigneten langsam laufenden Rührwerk bei ca. 300 U/min gründlich zu mischen. Auch die Boden- und Randbereiche des Mischgefäßes müssen dabei erfasst werden. Der Mischvorgang muss bis zum homogenen, schlierenfreien Zustand, mindestens jedoch 3 Minuten, durchgeführt werden. Material vorzugsweise danach nicht aus dem Liefergebinde verarbeiten, sondern sieben und in einen sauberen Behälter umtopfen und erneut ca. 1 Minute mischen. Die Temperatur der beiden Komponenten sollte beim Mischen zwischen 15 und 25 °C liegen.

Nach dem Anrühren erfolgt der Auftrag von "porviva WSC050" aus einer Farbwanne mit Ablauffläche durch Rollen im Kreuzgang. Die besten Ergebnisse werden mit einer lösungsmittelfesten flusenfreien Lackierwalze mit 6-7 mm Flor erzielt. Der Auftrag kann auch durch Spritzen erfolgen. Anschlussstellen sollten nach spätestens 8-10 Minuten beigearbeitet sein, andernfalls können Rollspuren sichtbar werden. Der Auftrag auf eine Standardwasserrutsche erfolgt in einer Dicke von 80 µm.

Als Gelcoat 1 und 2 werden 2-Komponenten Epoxidharze verwendet und auch in entsprechender Dicke aufgetragen.

Die Materialien werden in der nachfolgenden Tabelle näher definiert.

| **Bezeichnung** | **Harzkomponente** | **Härterkomponente** |
|---|---|---|
| **2K PUR** | Komponente A von porviva WSC050 (s. oben) | Komponente B von porviva WSC050 (s. oben) |
| MV 100 : 20 in | | |
| Gew.-Teilen | | |
| Gelcoat 1 | 1-methylethyliden)bis(4,1-phenylenoxymethylen)] bisoxirane 75% | Benzylalkohol 50% |
| | | 3-Aminomethyl-3,5,5-trimethylcyclohexylamin 20% |
| MV 100 : 50 in | Bisphenol-F-Epichlorhydrin-Harz 25% | Cyclohexanemethanamine, 5-amino-1,3,3-trimethyl-, Reaktionsprodukt mit Bisphenol A diglycidyl ether homopolymer 10% |
| Gew.-Teilen | | |
| | | Polyoxypropylenediamine 5% |
| | | 2,2,4-Trimethylhexan-1,6-diamin 5% |
| | | Phenol, 4,4'- (1-methylethylidene)bis-, polymer mit 2- (chloromethyl)oxirane, Reaktionsprodukt mit 2,2,4(or 2,4,4)-trimethyl-1,6-hexanediamine 10% |
| Gelcoat 2 | Bisphenol-F-Epichlorhydrinharze 60% | Phenol, styrolisiert 30% |
| | Bisphenol-A-Epichlorhydrinharze 25% | 2,2,4-Trimethylhexan-1,6-diamin 40% |
| MV 100 : 40 in | | Phenol, methylstyrolisiert 20% |
| | 1,6-Bis(2,3-epoxypropoxy)hexan 15% | Salicylsäure 10% |
| Gew.-Teilen | | |
| | Lösungsmittel: Naphtha 10-25% | |

Im nachfolgenden wird die Nassabriebbeständigkeit durch einen üblichen "Scrub"-Test gemäß DIN EN 13300:2002-11 (Beschichtungsstoffe - Wasserhaltige Beschichtungsstoffe und Beschichtungssysteme für Wände und Decken im Innenbereich - Einteilung; Deutsche Fassung EN 13300:2001 + AC:2002) getestet.

**Nassabriebbeständigkeit - Prüfergebnisse nach 200, 400, 600 und 800 Scheuerzyklen**

| | Nassabrieb [µm] nach... | | | | Anforderung nach 200 Zyklen |
|---|---|---|---|---|---|
| | 200 Zyklen | 400 Zyklen | 600 Zyklen | 800 Zyklen | |
| 2K PUR wasserbasiert | 3,0 µm | 3,5 µm | 3,7 µm | 4,2 µm | < 5,0 µm |
| Gelcoat 1 (2K epoxy) | 4,2 µm | 4,9 µm | 50,0 µm | 1000,0 µm | < 5,0 µm |
| Gelcoat 2 (2K epoxy) | 4,5 µm | 8,0 µm | 1000,0 µm | - | < 5,0 µm |
| 1000,0 µm = Testfilm vollständig zerstört | | | | | |

Aus der obigen Tabelle sieht man, dass selbst nach 800 Scheuerzyklen die erfindungsgemäß aufgebrachte 2K PUR-Beschichtung noch fast vollständig vollhanden ist. Die zum Vergleich aufgebrachten Gelcoats sind dagegen total entfernt.

## Patentansprüche

1. Verwendung eines 2-Komponenten Polyurethanharzes, das in einer Dicke von weniger als 100 µm als Beschichtung auf die Oberfläche einer Wasserrutsche aufgebracht wird, zur Erstausstattung, Pflege und Reparatur von Wasserrutschen.

2. Verwendung nach Anspruch 1, wobei die Auftragsdicke bei der Erstausstattung und Reparatur zwischen 20 und 80 µm, bevorzugt um 75 µm, liegt.

3. Verwendung nach Anspruch 1, wobei die Auftragsdicke bei der Einpflege zwischen 3 und 10 µm, bevorzugt bei ungefähr 5 µm, liegt.

4. Verwendung nach einem der Ansprüche 1 bis 3, wobei die Wasserrutsche durch Abstrahlen der bisherigen Oberflächenbeschichtung für das Aufbringen der Beschichtung vorbereitet wird.

5. Verwendung nach einem der Ansprüche 1 bis 4, wobei das 2-Komponenten Polyurethanharz durch eine Harzkomponente A und eine Härterkomponente B gebildet wird, wobei die Harzkomponente A eine anionische Polyacrylat-Dispersion, einen Entschäumer, ein Silikontensid, ein Polyacrylat-basiertes Oberflächen-Additiv, einen Katalysator und einen Rheologie-Modifizierer enthält, und die Härterkomponente B ein Polyisocyanat enthält.

6. Verwendung nach Anspruch 5, wobei die Härterkomponente B ein hydrophiles aliphatisches Polyisocyanat auf Basis von Hexamethylendiisocyanat (HDI) ist.
